# EUROPEAN PATENT APPLICATION

(11) **EP 4 814 134 A1**
(43) Date of publication of application: **30.09.2026**
(21) Application number: 24928305.2
(22) Date of filing: 13.12.2024
(51) Int. Cl.: C21B 7/16, C21B 5/00

(54) **BLAST FURNACE TUYERE APPARATUS AND BLAST FURNACE OPERATION METHOD**

(30) Priority: 05.03.2024 JP 2024033285
(71) Applicant: JFE Steel Corporation, Tokyo 100-0011 (JP)
(72) Inventor: KUWABARA, Minoru, Tokyo 100-0011 (JP); KANEYAMA, Shinnosuke, Tokyo 100-0011 (JP); MORITA, Yuya, Tokyo 100-0011 (JP); GOTO, Shuhei, Tokyo 100-0011 (JP); YANAGISAWA, Ryuta, Tokyo 100-0011 (JP)
(74) Representative: Hoffmann Eitle
(86) International application number: PCT/JP2024/044253
(87) International publication number: WO 2025/187165

(57) **Abstract**

The tuyere apparatus of the present disclosure includes an outer flow hole disposed on an outermost peripheral side inside a tuyere, and an inner flow hole disposed on an inner peripheral side of the outer flow hole. The inner flow hole has two or more independent flow paths that are spaced apart from an inner surface of the tuyere. A method of operating a blast furnace of the present disclosure uses the blast furnace tuyere apparatus and includes injecting a low-oxygen-concentration gas, a high-oxygen-concentration gas with a higher oxygen concentration than that of the low-oxygen-concentration gas, and a reducing agent into the blast furnace from the tuyere, injecting the low-oxygen-concentration gas through the outer flow hole, injecting the high-oxygen-concentration gas and the reducing agent through the inner flow hole, and injecting the high-oxygen-concentration gas and the reducing agent separately through the two or more independent flow paths.

## Description

### TECHNICAL FIELD

The present disclosure relates to a blast furnace tuyere apparatus and a method of operating a blast furnace using the tuyere apparatus.

### BACKGROUND

In recent years, there has been a strong demand to reduce carbon dioxide (CO₂) emissions against a backdrop of global environmental issues. Therefore, demand exists for operating blast furnaces within a steelworks while reducing the amount of newly introduced carbon raw materials by improving reaction efficiency or by recycling and reusing regenerated gas.

In a typical blast furnace, hot blast (air heated to about 1200 °C) is injected into the blast furnace as blast gas from a tuyere. The oxygen in this hot blast reacts with the carbon in coke or pulverized coal that is a reducing agent, generating carbon monoxide (CO) gas and hydrogen (H₂) gas. These carbon monoxide and hydrogen gases reduce the iron oxide in the iron ore charged into the blast furnace, and carbon dioxide is generated through a reduction reaction in which oxygen is converted from iron oxide to carbon monoxide.

As techniques for decreasing carbon dioxide emissions generated during blast furnace operations, techniques have been proposed to reform carbon monoxide and carbon dioxide contained in by-product gas emitted from blast furnaces and the like to produce hydrocarbons such as methane and ethanol, and then reintroduce these hydrocarbons into the blast furnace as reducing agents, thereby reducing the amount of reducing agents that need to be newly introduced. As a technique to maximize the use of these recycled reducing materials and minimize the amount of reducing materials newly introduced into the blast furnace, for example, Patent Literature (PTL) 1 proposes using oxygen gas as the blast gas.

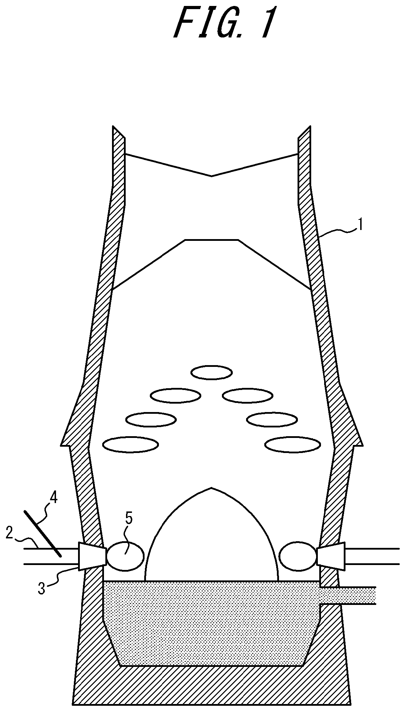

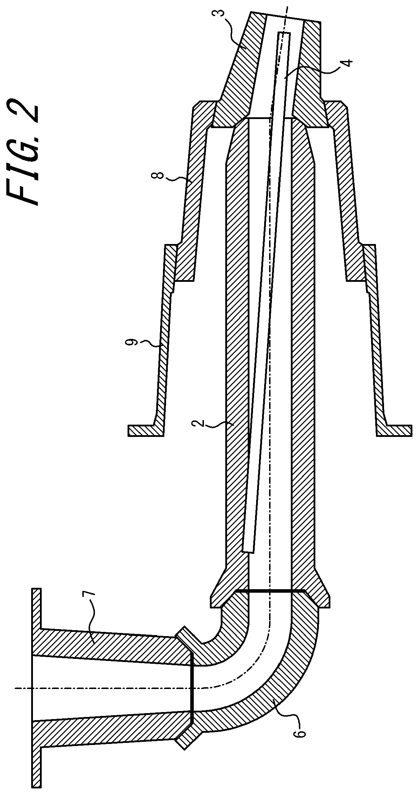

The blast gas is injected into the blast furnace by, for example, using a tuyere provided on the lower side wall of the blast furnace body 1, as illustrated in FIG. 1. The blast furnace tuyere apparatus is configured by a plurality of parts assembled together, such as a blow pipe 2, a small tuyere 3, an injection lance 4, a bent pipe 6, a straight pipe 7, a large tuyere 8, and a tuyere support metal fitting 9, as illustrated in FIG. 2, for example. Since the inside of the tuyere is under high pressure conditions of approximately 400 kPa, the connections between the various parts of the tuyere are sealed to prevent leakage of the gas flowing inside.

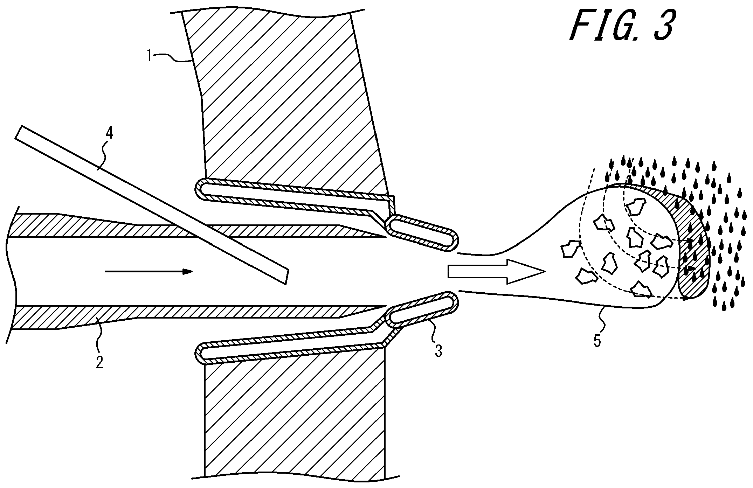

Furthermore, as illustrated in FIG. 3, the tip portion of the blast furnace tuyere apparatus is exposed to an environment where high-temperature molten pig iron and molten slag flow down along with high-temperature gases generated by the combustion of coke and other materials. The blast gas injected from the tip of the small tuyere 3 into the coke packed bed inside the blast furnace induces swirling combustion of coke in front of the tuyere due to its kinetic energy, thereby forming a space called a raceway 5 extending approximately 1 m from the tuyere tip into the furnace. The formation of the raceway 5 displaces both the position at which the maximum temperature of the combustion reaction occurs and the dripping region of high-temperature molten materials away from the tip of the tuyere toward the blast furnace interior, thereby reducing the thermal load on the tip portion of the tuyere.

As illustrated in PTL 2 to 5, techniques have been developed to improve reaction efficiency by promoting mixing contact between the auxiliary reducing agent and oxygen. In all of these techniques, under operations using heated air as the base blast gas, the auxiliary reducing agent together with a small amount of supplementary oxygen gas is injected through the injection lance and mixed with the heated air.

### CITATION LIST

### Patent Literature

PTL 1: WO 2021/106579 A1
PTL 2: JP H6-330113 A
PTL 3: JP H11-12613 A
PTL 4: WO 2018/180892 A1
PTL 5: JP 2013-19006 A

### SUMMARY

### (Technical Problem)

In the conventional equipment configuration of the tuyere portion of a blast furnace, direct contact of oxygen gas with connection portions between tuyere components may create a slight risk of leakage of high-oxygen-concentration gas with an extremely high oxidation power from the tuyere connection portions. Leakage of such high-oxygen-concentration gas could lead to equipment damage due to abnormal combustion or the like, thereby posing a risk of operational problems.

In view of the above problems, an object of the present disclosure is to provide a blast furnace tuyere apparatus that can control leakage of high-oxygen-concentration gas from a tuyere connection portion in a blast furnace tuyere apparatus that uses a high-oxygen-concentration gas mainly composed of oxygen as the blast gas, and a method of operating a blast furnace using the tuyere apparatus.

### (Solution to Problem)

Primary features of the present disclosure are as follows.
(1) A blast furnace tuyere apparatus including an outer flow hole disposed on an outermost peripheral side inside a tuyere, and an inner flow hole disposed on an inner peripheral side of the outer flow hole, wherein
   the inner flow hole has two or more independent flow paths, and
   the two or more independent flow paths are spaced apart from an inner surface of the tuyere.
(2) The blast furnace tuyere apparatus according to (1), wherein the tuyere includes a small tuyere and a blow pipe,
   an injection pipe is disposed inside the small tuyere on an inner peripheral side of the blow pipe so as to be spaced apart from the small tuyere,
   the outer flow hole is disposed between (i) the small tuyere and the blow pipe and (ii) the injection pipe, and
   the inner flow hole is disposed inside the injection pipe.
(3) The blast furnace tuyere apparatus according to (2), wherein a joint between the small tuyere and the blow pipe has a fitted structure.
(4) The blast furnace tuyere apparatus according to any one of (1) to (3), wherein in the inner flow hole, at least one of the two or more independent flow paths has a constricted shape toward a downstream side.
(5) The blast furnace tuyere apparatus according to any one of (2) to (4), wherein a clearance between the small tuyere and the injection pipe is 20 % or more of an inner diameter of the small tuyere.
(6) The blast furnace tuyere apparatus according to any one of (2) to (5), wherein the injection pipe includes a water cooling mechanism.
(7) The blast furnace tuyere apparatus according to any one of (2) to (6), wherein the injection pipe is connected to the blow pipe at a rear end portion of the blow pipe.
(8) The blast furnace tuyere apparatus according to any one of (2) to (7), including a mixing-promotion structure including a communication portion configured to bring at least two of the two or more independent flow paths into communication at an outlet portion of the injection pipe.
(9) A method of operating a blast furnace using the blast furnace tuyere apparatus according to any one of (1) to (8), including:
   injecting a low-oxygen-concentration gas, a high-oxygen-concentration gas with a higher oxygen concentration than that of the low-oxygen-concentration gas, and a reducing agent into the blast furnace from the tuyere;
   injecting the low-oxygen-concentration gas through the outer flow hole;
   injecting the high-oxygen-concentration gas and the reducing agent through the inner flow hole; and
   injecting the high-oxygen-concentration gas and the reducing agent separately through the two or more independent flow paths.
(10) The method of operating a blast furnace according to (9), wherein a gas flow velocity of the high-oxygen-concentration gas is 180 m/s or more at a downstream portion of the tuyere and 60 m/s or less at an upstream portion of the tuyere.
(11) The method of operating a blast furnace according to (9) or (10), wherein the reducing agent includes at least one selected from the group consisting of blast furnace gas, coke oven gas, ammonia, carbon monoxide, hydrogen, methane, ethane, ethylene, acetylene, propane, propylene, propyne, butane, butene, butyne, methanol, ethanol, and dimethyl ether.

### (Advantageous Effect)

According to the present disclosure, a blast furnace tuyere apparatus that can control leakage of high-oxygen-concentration gas from a tuyere connection portion in a blast furnace tuyere apparatus that uses a high-oxygen-concentration gas mainly composed of oxygen as the blast gas, and a method of operating a blast furnace using the tuyere apparatus, can be provided.

### BRIEF DESCRIPTION OF THE DRAWINGS

In the accompanying drawings:
FIG. 1 is a schematic cross-sectional view illustrating the structure of a blast furnace;
FIG. 2 is a schematic cross-sectional view illustrating the structure of a conventional blast furnace tuyere apparatus;
FIG. 3 is a diagram illustrating the structure of the tip portion of a blast furnace tuyere apparatus;
FIG. 4 is a schematic cross-sectional view illustrating the structure of a blast furnace tuyere apparatus according to an embodiment of the present disclosure;
FIG. 5 is a schematic cross-sectional view illustrating the structure of the tip portion of the tuyere apparatus in FIG. 4;
FIG. 6A is a partial cross-sectional view illustrating a first example of a mixing-promotion structure;
FIG. 6B is a partial cross-sectional view illustrating a second example of the mixing-promotion structure;
FIG. 6C is a partial cross-sectional view illustrating a third example of the mixing-promotion structure;
FIG. 6D is a partial cross-sectional view (left view) and a cross-sectional view (right view) orthogonal to the direction of extension of the injection pipe, illustrating a fourth example of the mixing-promotion structure; and
FIG. 6E is a partial cross-sectional view (left view) and a cross-sectional view (right view) orthogonal to the direction of extension of the injection pipe, illustrating a fifth example of the mixing-promotion structure.

### DETAILED DESCRIPTION

Hereinafter, embodiments of the present disclosure are illustratively described in detail, with reference to the drawings.

### <Blast furnace tuyere apparatus>

A blast furnace tuyere apparatus according to an embodiment of the present disclosure will be described. The tuyere apparatus of the present embodiment is used for operations in which blast gas (primarily high-oxygen-concentration gas) and reducing agents are injected into the blast furnace.

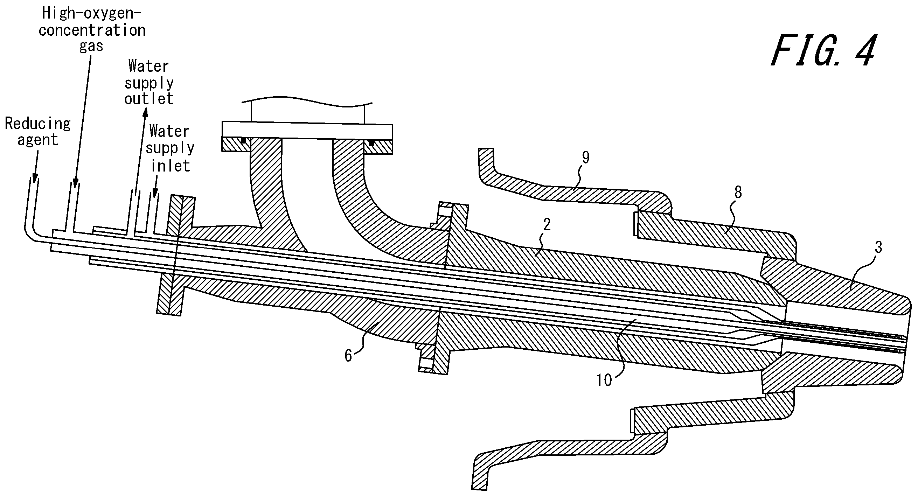

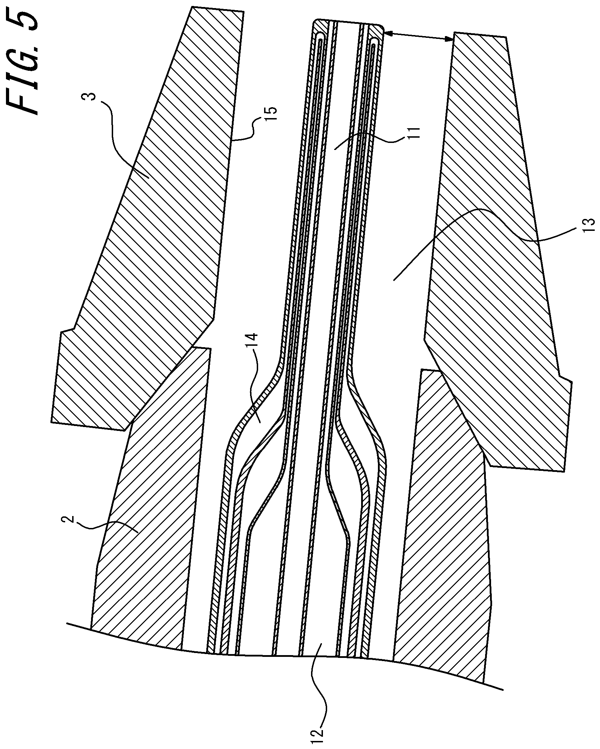

The tuyere apparatus of the present embodiment can be, for example, a tuyere apparatus used in a blast furnace, as illustrated in FIG. 1. The tuyere apparatus is disposed on the lower side wall of the blast furnace body 1. FIG. 4 is a schematic cross-sectional view illustrating the structure of the blast furnace tuyere apparatus according to an embodiment of the present disclosure. FIG. 5 is a schematic cross-sectional view illustrating the structure of the tip portion of the tuyere apparatus in FIG. 4.

As illustrated in FIGS. 4 and 5, the tuyere apparatus of the present embodiment includes a blow pipe 2, a small tuyere 3, a bent pipe 6, a large tuyere 8, a tuyere support metal fitting 9, and an injection pipe 10. The tuyere apparatus of the present embodiment includes a tuyere that in turn includes the small tuyere 3, the blow pipe 2, and the injection pipe 10. Furthermore, a raceway 5 is formed at the tip of the tuyere.

The blow pipe 2 is a pipe that guides the low-oxygen-concentration gas, which is introduced from the bent pipe 6, to the small tuyere 3. The blow pipe 2 is preferably heat resistant. As illustrated in the drawings, the blow pipe 2 is located inside the large tuyere 8, with the tip thereof connected to the rear end of the small tuyere 3.

The small tuyere 3 is a pipe that guides the blast gas, which has been introduced from the blow pipe 2, into the furnace. The small tuyere 3 is disposed so as to protrude into the blast furnace and is in direct contact with the atmosphere inside the blast furnace.

The bent pipe 6 is a pipe that guides the blast gas to the blow pipe 2.

The bent pipe 6, blow pipe 2, and small tuyere 3 are connected in this order. In the present embodiment, the joint between the small tuyere 3 and the blow pipe 2 has a fitted structure. In other words, instead of using strong connections such as bolts to join the small tuyere 3 and the blow pipe 2, each connection portion is configured with a smooth spherical fitted joint to create a firm seal therebetween. When displacement occurs in the small tuyere 3, the sliding action of the spherical surface can prevent gas leakage and absorb the displacement. Similarly, in the present embodiment, the joint between the blow pipe 2 and the bent pipe 6 also has a fitted structure.

With this configuration, even in the high-temperature region of a blast furnace, where the temperature exceeds 2000 °C, the spherical sliding action can absorb displacement (while preventing gas leakage) even with respect to thermal expansion and contraction, thus preventing damage to the equipment.

The tip portion of the large tuyere 8 cantilever-supports the rear end portion of the small tuyere 3. The inner diameter of the tip portion of the large tuyere 8 and the outer diameter of the rear end portion of the small tuyere 3 are approximately equal. The large tuyere 8 and the small tuyere 3 can be fitted together using the fitted structure described above, or they can be fixed together using fasteners such as bolts.

The tip portion of the tuyere support metal fitting 9 supports the rear end portion of the large tuyere 8, thereby securely fixing the small tuyere 3 and the large tuyere 8 to the lower side wall of the blast furnace body 1. As illustrated in the drawings, the inner diameter of the tip portion of the tuyere support metal fitting 9 and the outer diameter of the rear end portion of the large tuyere 8 are approximately equal.

The injection pipe 10 is a pipe for injecting the blast gas and reducing agent into the furnace. The injection pipe 10 is connected to the blow pipe 2 at the rear end portion of the blow pipe 2. In the present embodiment, the blast gas is mainly a high-oxygen-concentration gas.

As illustrated in FIGS. 4 and 5, the tuyere apparatus includes an outer flow hole 13, disposed on the outermost peripheral side inside the tuyere, and the injection pipe 10 disposed on the inner peripheral side of the outer flow hole 13. The injection pipe 10 is disposed inside the small tuyere 3 on the inner peripheral side of the blow pipe 2 so as to be spaced apart from the small tuyere 3. The outer flow hole 13 is disposed between (i) the small tuyere 3 and the blow pipe 2 and (ii) the injection pipe 10. An inner flow hole is disposed inside the injection pipe 10. The inner flow hole has two or more independent flow paths. In this example, the two or more independent flow paths are an intermediate flow hole 12 disposed on the inner peripheral side of the outer flow hole 13, and a central flow hole 11 disposed further on the inner peripheral side of the intermediate flow hole 12. In this example, the two or more independent flow paths have a double-pipe structure, but they may also have a triple-pipe structure or greater, or they can be configured by arranging a plurality of single pipes side by side.

The intermediate flow hole 12 and the central flow hole 11 are installed at arbitrary positions outside the furnace from the tip of the tuyere, and the gas ejected from each flow hole at the tip portion of the injection pipe 10 becomes a mixed gas which can then be injected into the blast furnace.

The outer flow hole 13 is a hole through which low-oxygen-concentration gas is caused to flow. "Low oxygen concentration" refers to an oxygen concentration that does not cause equipment to burn when the gas is in contact with the tuyere apparatus or surrounding equipment outside the tuyere. For example, an oxygen concentration of 35 % or less (0 % to 35 %) is preferable. The low-oxygen-concentration gas can, for example, be air or another gas (such as nitrogen gas (even nitrogen gas that contains no oxygen at all)). Furthermore, a reducing agent may be caused to flow through the outer flow hole 13. The low-oxygen-concentration gas and the reducing agent do not pose a risk of breakaway oxidation (abnormal oxidation) even at high temperatures and may therefore be heated to high temperatures and injected.

The inner flow hole is a hole through which flow a high-oxygen-concentration gas, which has a higher oxygen concentration than that of the low-oxygen-concentration gas (flowing through the outer flow hole 13), and a reducing agent. The "high-oxygen-concentration gas" preferably refers to an oxygen concentration of over 35 % (more than 35 % and 100 % or less), for example. The high-oxygen-concentration gas may cause breakaway oxidation of flow piping upon reaching high temperatures and is therefore preferably caused to flow at temperatures of 800 °C or lower. The high-oxygen-concentration gas is even more preferably caused to flow at room temperature. The inner flow hole has at least two or more independent flow paths (in this example, two flow paths, i.e., the intermediate flow hole 12 and the central flow hole 11) through which a high-oxygen-concentration gas and a reducing agent, respectively, are caused to flow. By causing the high-oxygen-concentration gas and the reducing agent to flow through separate paths, operational problems caused by ignition and abnormal combustion within the channels can be prevented.

The intermediate flow hole 12 is a hole through which flows the high-oxygen-concentration gas, which has a higher oxygen concentration than that of the low-oxygen-concentration gas.

The central flow hole 11 is a hole through which the reducing agent flows. A solid reducing agent or a gaseous reducing agent can be used as the reducing agent. In particular, a gaseous reducing agent is preferably used. In this case, the reducing agent preferably includes at least one selected from the group consisting of blast furnace gas, coke oven gas, ammonia, carbon monoxide, hydrogen, methane, ethane, ethylene, acetylene, propane, propylene, propyne, butane, butene, butyne, methanol, ethanol, and dimethyl ether. In the case of using a solid reducing agent, granular reducing agents such as pulverized coal and waste plastic can be used.

In the present embodiment of the tuyere apparatus, the two or more independent flow paths (in this example, the intermediate flow hole 12 and the central flow hole 11) are spaced apart from an inner surface 15 of the tuyere. In this example, the outer flow hole 13, which is another flow path (a flow path for low-oxygen-concentration gas), is disposed between the two or more independent flow paths and the inner surface 15 of the tuyere.

The operations and effects of the blast furnace tuyere apparatus of the present embodiment are described below.

The blast furnace tuyere apparatus of the present embodiment includes the outer flow hole 13 disposed on the outermost peripheral side inside the tuyere, and the inner flow hole disposed on the inner peripheral side of the outer flow hole 13. The inner flow hole has two or more independent flow paths (in this example, the intermediate flow hole 12 and the central flow hole 11), and the two or more independent flow paths are spaced apart from the inner surface 15 of the tuyere.

In this configuration, by injecting the low-oxygen-concentration gas through the outer flow hole 13, injecting the high-oxygen-concentration gas and the reducing agent through the inner flow hole, and injecting the high-oxygen-concentration gas and the reducing agent separately through the two or more independent flow paths, the flow path into which the high-oxygen-concentration gas is injected is spaced apart from the inner surface 15 of the tuyere. As a result, the high-oxygen-concentration gas does not come into contact with the inner surface 15 of the tuyere (and even if it leaks from the flow path, it will mix with the low-oxygen-concentration gas before coming into contact with the inner surface 15 of the tuyere), thus controlling leakage of high-oxygen-concentration gas from the connection portions of the tuyere components, which are prone to gas leakage, and avoiding problems such as equipment damage due to abnormal combustion.

Thus, according to the blast furnace tuyere apparatus of the present embodiment, leakage of high-oxygen-concentration gas from the tuyere connection portion can be controlled in a blast furnace tuyere apparatus that uses a high-oxygen-concentration gas, mainly composed of oxygen, as the blast gas.

In particular, when the joint between the small tuyere 3 and the blow pipe 2 has a fitted structure, the effect of preventing equipment damage by absorbing displacement due to thermal expansion and contraction caused by temperature fluctuations can be obtained, as described above, but the problem of leakage of the high-oxygen-concentration gas from the connection portions of the tuyere components becomes significant. In such cases, the configuration of the tuyere apparatus of the present embodiment is particularly effective.

Furthermore, as described above, since the inner flow hole has two or more independent flow paths (in this example, the intermediate flow hole 12 and the central flow hole 11), operational problems such as ignition and abnormal combustion within the flow path can be prevented by causing the high-oxygen-concentration gas and the reducing agent to flow through separate flow paths.

In terms of specific configuration, the tuyere preferably includes the small tuyere 3 and the blow pipe 2, with the injection pipe 10 being disposed inside the small tuyere 3 on the inner peripheral side of the blow pipe 2 so as to be spaced apart from the small tuyere 3, with the outer flow hole 13 being disposed between (i) the small tuyere 3 and the blow pipe 2 and (ii) the injection pipe 10, and with the inner flow hole being disposed inside the injection pipe 10.

In this case, when using a high-oxygen-concentration gas as the blast gas for the blast furnace, the gas flow velocity at the tuyere tip decreases compared to a conventional air blast, due to the absence of nitrogen in the blast gas. As a result, a sufficiently large raceway 5 may not be formed, and the dripping region of the high-temperature molten material may come close to the tip portion of the tuyere, potentially leading to frequent tuyere breakage. Therefore, to form a sufficiently large raceway 5 and reduce the heat load on the tuyere, it is preferable to reduce the cross-sectional area of the flow path for the high-oxygen-concentration gas and increase the discharge gas flow velocity into the blast furnace. On the other hand, since the high-oxygen-concentration gas has a high oxidizing power, simply reducing the cross-sectional area of the high-oxygen-concentration gas flow path in the injection pipe 10 and causing the high-oxygen-concentration gas to flow at a high velocity may cause damage to the piping due to breakaway oxidation of the piping caused by friction.

Therefore, as illustrated in FIGS. 4 and 5, in the inner flow hole, at least one of the two or more independent flow paths (in this example, the intermediate flow hole 12) preferably has a constricted shape directed downstream.

This configuration can prevent damage to the piping by keeping the flow velocity of the high-oxygen-concentration gas from becoming too high on the upstream side, while simultaneously ensuring a sufficiently high flow velocity on the downstream side and forming a raceway of adequate size, thereby reducing the heat load on the tuyere and preventing damage to the tuyere.

More specifically, the flow velocity of the high-oxygen-concentration gas is preferably 60 m/s or less in the upstream portion. The flow velocity is preferably 180 m/s or more in the downstream portion. The flow velocity is preferably 250 m/s or less in the downstream portion. By keeping the oxygen flow velocity in the upstream portion at 60 m/s or less, the problem of breakaway oxidation of the piping due to friction can be avoided. On the other hand, by keeping the flow velocity in the downstream portion at 180 m/s or more, a raceway can be formed more reliably, and by keeping the flow velocity at 250 m/s or less, excessive pressure loss in the piping, which would prevent a sufficient amount of gas from flowing, can be avoided.

The "upstream portion" can, for example, be located upstream from the tip of the blow pipe 2, and therefore, the flow velocity of the high-oxygen-concentration gas can be kept at 60 m/s or less upstream from the tip of the blow pipe 2. The "downstream portion" can, for example, be the tip position of the small tuyere 3, and the flow velocity of the high-oxygen-concentration gas at this position can be set to be from 180 m/s to 250 m/s.

To achieve the aforementioned preferred flow velocity conditions for the high-oxygen-concentration gas, the hole through which the high-oxygen-concentration gas flows (in this example, the intermediate flow hole 12) preferably has a constricted shape towards the downstream side. In this example, as illustrated in the drawings, the intermediate flow hole 12 has a large cross-sectional area portion on the upstream side and a small cross-sectional area portion (having a smaller cross-sectional area than the large cross-sectional area portion) on the downstream side, and these portions are smoothly connected. The cross-sectional area of the large cross-sectional area portion is preferably three times or more the cross-sectional area of the small cross-sectional area portion. The cross-sectional area of the large cross-sectional area portion is more preferably four times or more the cross-sectional area of the small cross-sectional area portion. As illustrated in FIG. 5, from the perspective of reducing the flow velocity of the high-oxygen-concentration gas, the position of connection (connection region) between the large cross-sectional area portion and the small cross-sectional area portion is preferably located inside the small tuyere 3. In the illustrated example, the large cross-sectional area portion and the small cross-sectional area portion each have a substantially constant cross-sectional area. However, either or both of the large and small cross-sectional area portions may have a shape in which the cross-sectional area gradually decreases toward the downstream side.

The gas flow rate of the high-oxygen-concentration gas varies depending on the operating conditions of the blast furnace, but minor changes in operation pose no problem if the flow path cross-sectional area is optimized as described above. However, if operating conditions change significantly, the same tuyere apparatus may no longer be able to maintain the appropriate flow velocity conditions. In that case, the cross-sectional area of the high-oxygen-concentration gas flow path can be changed by modifying the equipment to achieve optimization. When a removable injection pipe 10 is used, the flow path cross-sectional area can be easily changed. Therefore, a plurality of shapes of injection pipes 10 can be prepared in anticipation of changes in operating conditions, and the injection pipes 10 can be swapped as needed to match the operating conditions. Furthermore, in FIG. 5, in the case of concern for damage to the small tuyere 3 due to the effects of high-temperature molten material or the like (for example, if the coolant temperature of the tuyere rises abnormally), a low-oxygen-concentration gas such as high-temperature air, reducing gas, or nitrogen gas may be caused to flow through the outer flow hole 13, and the outer diameter of the tip portion of the injection pipe 10 and the inner diameter of the small tuyere 3 may be adjusted to reduce the flow path cross-sectional area for the low-oxygen-concentration gas, increase the velocity of the gas discharged from the tuyere, and secure a larger space for the raceway 5, as illustrated in FIG. 3, thereby moving the dripping region of the high-temperature molten material away from the tuyere tip towards the inside of the furnace. The heat load on the tip of the small tuyere 3 can thus be reduced and adjusted.

Here, the clearance between the small tuyere 3 and the injection pipe 10 (the distance at the tip (see the bidirectional arrow in FIG. 5)) is preferably 20 % or more of the inner diameter of the small tuyere 3 (the inner diameter at the tip).

The position of the small tuyere 3 changes for reasons such as thermal fluctuations inside the blast furnace or physical collisions with raw materials inside the blast furnace. At this time, the small tuyere 3 and the injection pipe 10 are spaced apart from each other, but if the displacement of the small tuyere 3 is too large, the small tuyere 3 and the injection pipe 10 might come into contact. If the small tuyere 3 and the injection pipe 10 come into contact, a large force will be applied to the injection pipe 10 through which the high-oxygen-concentration gas flows, potentially damaging the flow path of the high-oxygen-concentration gas and causing the high-oxygen-concentration gas to leak. Therefore, a design with sufficient clearance between the inner surface 15 of the small tuyere 3 and the injection pipe 10 is preferable so that the small tuyere 3 does not come into contact with the injection pipe 10 and sustain damage when moving. Since the small tuyere 3 is expected to be displaced by up to 20 % of its inner diameter for reasons such as the thermal expansion and contraction of surrounding equipment, the clearance between the small tuyere 3 and the injection pipe 10 is preferably 20 % or more of the inner diameter of the small tuyere 3. The clearance is more preferably 30 % or more of the inner diameter of the small tuyere 3. To ensure a proper clearance between the small tuyere 3 and the injection pipe 10 while also ensuring an appropriate cross-sectional area for the high-oxygen-concentration gas flow path, the constricted shape of the high-oxygen-concentration gas flow path is preferably such that the point of connection (connection region) between the large cross-sectional area portion and the small cross-sectional area portion is disposed on the upstream side from the small tuyere 3, for example, inside the blow pipe 2, from the perspective of ensuring the aforementioned clearance. Sufficient clearance can thus be maintained between the small tuyere 3 and the injection pipe 10 throughout the entire interior of the small tuyere 3. Furthermore, from the perspective of achieving both a reduction in the flow velocity of the high-oxygen-concentration gas and securing the aforementioned clearance, the point of connection (connection region) between the large-area portion and the small-area portion is preferably near the tip of the blow pipe 2.

The injection pipe 10 preferably includes a water cooling mechanism 14. In this example, the water cooling mechanism 14 is a hole through which coolant can flow and is adjacent to the outer flow hole 13. In this example, the water cooling mechanism 14 has a forward path and a return path, and the forward path and the return path are separated by a wall. By providing such a water cooling mechanism 14, even when heated air is caused to flow through the outer flow hole 13, for example, the injection pipe 10 can be protected, further enhancing the effect of controlling breakaway oxidation.

As mentioned above, the injection pipe 10 is connected to the blow pipe 2 at the rear end portion of the blow pipe 2. The injection pipe 10 attached to the rear end portion of the blow pipe 2 can be configured to be detachable by providing a mounting portion. By appropriately replacing the injection pipe 10 with one in which the flow path thickness of each flow hole is set appropriately so that the flow path cross-sectional area satisfies the appropriate conditions for gas flow velocity, the gas flow velocity conditions can be optimized even when the operating conditions of the blast furnace change.

Furthermore, the tuyere apparatus preferably includes a mixing-promotion structure that mixes the high-oxygen-concentration gas and the reducing agent inside the injection pipe 10. Such a mixing-promotion structure preferably includes a communication portion that brings at least two of the two or more independent flow paths into communication at an outlet portion of the injection pipe. This promotes the mixing of the high-oxygen-concentration gas and the reducing agent inside the injection pipe 10, thereby improving the flammability of the reducing agent. When the flammability of the reducing agent is improved, the gas volume increases due to combustion expansion, which allows for a further increase in the size of the raceway 5 and further reduction of the heat load on the tuyere. In particular, it is preferable to provide such a mixing-promotion structure at the tip portion of the injection pipe 10.

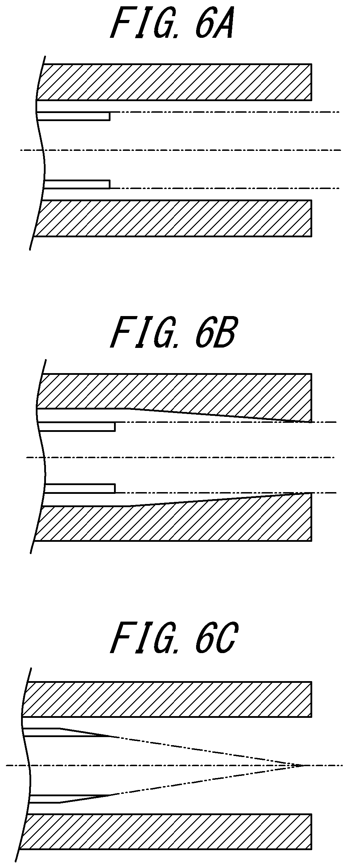

FIGS. 6A to 6E illustrate specific examples of mixing-promotion structures.

In the example illustrated in FIG. 6A, the flow path of the injection pipe 10 is a double-pipe structure. As described above, the outer peripheral side can be designated as the intermediate flow hole 12 and the inner peripheral side as the central flow hole 11. In this case, as illustrated in the drawing, the tip portion of the pipe (the inner pipe of the double pipe) disposed at the boundary between the central flow hole 11 and the intermediate flow hole 12 is disposed at a position upstream from the tip portion of the injection pipe 10. With this configuration, mixing of the reducing agent flowing into the central flow hole 11 and the high-oxygen-concentration gas flowing into the intermediate flow hole 12 begins upstream from the injection pipe 10, thereby promoting the mixing of the reducing agent and the high-oxygen-concentration gas inside the injection pipe 10.

In the example illustrated in FIG. 6B, in addition to the structure illustrated in FIG. 6A, a taper is provided on the inner surface of the outer peripheral side of the inner pipe of the double pipe, with the diameter narrowing towards the downstream side. With this configuration, the outer flow (high-oxygen-concentration gas) collides inward with the inner flow (reducing agent), further promoting the mixing of the outer and inner flows.

In the example illustrated in FIG. 6C, in addition to the structure illustrated in FIG. 6A, the outer surface at the tip of the inner pipe of the double pipe is chamfered, so that the outer flow path widens towards the downstream side. With this configuration, the outer flow collides inward with the inner flow, further promoting the mixing of the outer and inner flows.

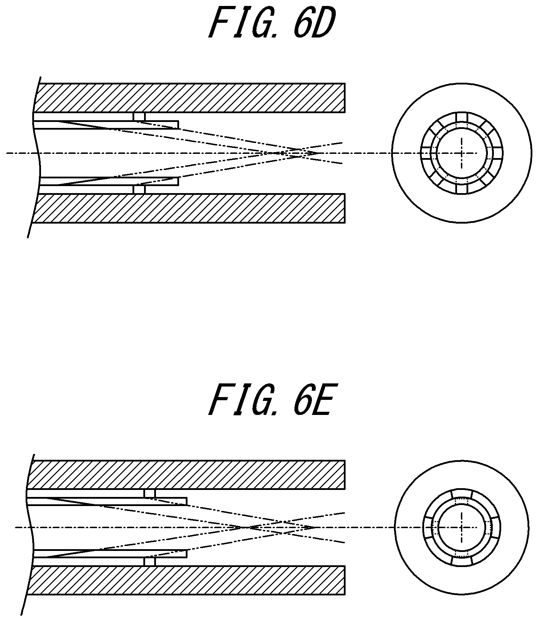

In the examples illustrated in FIGS. 6D and 6E, in addition to the structure illustrated in FIG. 6A, the outer channel is made porous by blocking a portion of the outer channel (4 to 8 locations in the circumferential direction) (8 locations in the example of FIG. 6D, and 4 locations in the example of FIG. 6E). This intensifies turbulence and further promotes mixing of the outer and inner flows. Furthermore, by providing a through-hole connecting the central flow hole 11 and the intermediate flow hole 12 in the inner pipe of the double pipe at a position upstream from the blocked portion of the flow path, the mixing of the outer and inner flows can be further promoted. In the examples in FIGS. 6D and 6E, the points where the flow path is blocked are at equal intervals around the circumference, but it is also possible to block the flow path at different intervals around the circumference.

### <Method of operating blast furnace>

Next, a method of operating a blast furnace according to an embodiment of the present disclosure is described. The method of operating a blast furnace of the present embodiment can, for example, be performed in a blast furnace that includes the tuyere apparatus of the embodiments described earlier. Since the embodiments of such a tuyere apparatus have already been described, further explanation is omitted.

The method of operating a blast furnace of the present embodiment includes injecting a low-oxygen-concentration gas, a high-oxygen-concentration gas with a higher oxygen concentration than that of the low-oxygen-concentration gas, and a reducing agent into the blast furnace from the tuyere, injecting the low-oxygen-concentration gas through the outer flow hole 13, injecting the high-oxygen-concentration gas and the reducing agent through the inner flow hole, and injecting the high-oxygen-concentration gas and the reducing agent separately through the two or more independent flow paths (for example, an intermediate flow hole 12 and a central flow hole 11).

According to the method of operating a blast furnace of the present embodiment, the flow path into which the high-oxygen-concentration gas is injected is spaced apart from the inner surface 15 of the tuyere. As a result, the high-oxygen-concentration gas does not come into contact with the inner surface 15 of the tuyere (and even if it leaks from the flow path, it will mix with the low-oxygen-concentration gas before coming into contact with the inner surface 15 of the tuyere), thus controlling leakage of high-oxygen-concentration gas from the connection portions of the tuyere components, which are prone to gas leakage, and avoiding problems such as equipment damage due to abnormal combustion.

Thus, according to the method of operating a blast furnace of the present embodiment, leakage of high-oxygen-concentration gas from the tuyere connection portion can be controlled in a blast furnace tuyere apparatus that uses a high-oxygen-concentration gas, mainly composed of oxygen, as the blast gas.

In particular, when the joint between the small tuyere 3 and the blow pipe 2 has a fitted structure, the effect of preventing equipment damage by absorbing displacement due to thermal expansion and contraction caused by temperature fluctuations can be obtained, as described above, but the problem of leakage of the high-oxygen-concentration gas from the connection portions of the tuyere components becomes significant. In such cases, the method of operating a blast furnace of the present embodiment is particularly effective.

Furthermore, as described above, since the inner flow hole has two or more independent flow paths (in this example, the intermediate flow hole 12 and the central flow hole 11), operational problems such as ignition and abnormal combustion within the flow path can be prevented by causing the high-oxygen-concentration gas and the reducing agent to flow through separate flow paths.

As mentioned above, the flow velocity of the high-oxygen-concentration gas is preferably 60 m/s or less in the upstream portion. The flow velocity is preferably 180 m/s or more in the downstream portion. The flow velocity is preferably 250 m/s or less in the downstream portion. By keeping the oxygen flow velocity in the upstream portion at 60 m/s or less, the problem of breakaway oxidation of the piping due to friction can be avoided. On the other hand, by keeping the flow velocity in the downstream portion at 180 m/s or more, the raceway 5 can be formed more reliably, and by keeping the flow velocity at 250 m/s or less, excessive pressure loss in the piping, which would prevent a sufficient amount of gas from flowing, can be avoided.

The upstream portion can, for example, be located upstream from the tip of the blow pipe 2, and therefore, the flow velocity of the high-oxygen-concentration gas can be kept at 60 m/s or less upstream from the tip of the blow pipe 2. The downstream portion can, for example, be the tip position of the small tuyere 3, and the flow velocity of the high-oxygen-concentration gas at this position can be set to be from 180 m/s to 250 m/s.

As described above, in the method of the present embodiment, a solid reducing agent or a gaseous reducing agent can be used as the reducing agent. In particular, a gaseous reducing agent is preferably used. In this case, the reducing agent preferably includes at least one selected from the group consisting of blast furnace gas, coke oven gas, ammonia, carbon monoxide, hydrogen, methane, ethane, ethylene, acetylene, propane, propylene, propyne, butane, butene, butyne, methanol, ethanol, and dimethyl ether. In the case of using a solid reducing agent, granular reducing agents such as pulverized coal and waste plastic can be used.

### REFERENCE SIGNS LIST

- 1: Blast furnace body
- 2: Blow pipe
- 3: Small tuyere
- 4: Injection lance
- 5: Raceway
- 6: Bent pipe
- 7: Straight pipe
- 8: Large tuyere
- 9: Tuyere support metal fitting
- 10: Injection pipe
- 11: Central flow hole
- 12: Intermediate flow hole
- 13: Outer flow hole
- 14: Water cooling mechanism
- 15: Inner surface of tuyere

## Claims

1. A blast furnace tuyere apparatus comprising:
an outer flow hole disposed on an outermost peripheral side inside a tuyere, and an inner flow hole disposed on an inner peripheral side of the outer flow hole, wherein
the inner flow hole has two or more independent flow paths, and
the two or more independent flow paths are spaced apart from an inner surface of the tuyere.

2. The blast furnace tuyere apparatus according to claim 1, wherein
the tuyere comprises a small tuyere and a blow pipe,
an injection pipe is disposed inside the small tuyere on an inner peripheral side of the blow pipe so as to be spaced apart from the small tuyere,
the outer flow hole is disposed between (i) the small tuyere and the blow pipe and (ii) the injection pipe, and
the inner flow hole is disposed inside the injection pipe.

3. The blast furnace tuyere apparatus according to claim 2, wherein a joint between the small tuyere and the blow pipe has a fitted structure.

4. The blast furnace tuyere apparatus according to any one of claims 1 to 3, wherein in the inner flow hole, at least one of the two or more independent flow paths has a constricted shape toward a downstream side.

5. The blast furnace tuyere apparatus according to claim 2 or 3, or according to claim 4 when dependent on claim 2 or 3, wherein a clearance between the small tuyere and the injection pipe is 20 % or more of an inner diameter of the small tuyere.

6. The blast furnace tuyere apparatus according to any one of claims 2, 3, or 5, or according to claim 4 when dependent on claim 2 or 3, wherein the injection pipe comprises a water cooling mechanism.

7. The blast furnace tuyere apparatus according to any one of claims 2, 3, 5, or 6, or according to claim 4 when dependent on claim 2 or 3, wherein the injection pipe is connected to the blow pipe at a rear end portion of the blow pipe.

8. The blast furnace tuyere apparatus according to any one of claims 2, 3, 5, 6, or 7, or according to claim 4 when dependent on claim 2 or 3, comprising a mixing-promotion structure including a communication portion configured to bring at least two of the two or more independent flow paths into communication at an outlet portion of the injection pipe.

9. A method of operating a blast furnace using the blast furnace tuyere apparatus according to any one of claims 1 to 8, comprising:
injecting a low-oxygen-concentration gas, a high-oxygen-concentration gas with a higher oxygen concentration than that of the low-oxygen-concentration gas, and a reducing agent into the blast furnace from the tuyere;
injecting the low-oxygen-concentration gas through the outer flow hole;
injecting the high-oxygen-concentration gas and the reducing agent through the inner flow hole; and
injecting the high-oxygen-concentration gas and the reducing agent separately through the two or more independent flow paths.

10. The method of operating a blast furnace according to claim 9, wherein a gas flow velocity of the high-oxygen-concentration gas is 180 m/s or more at a downstream portion of the tuyere and 60 m/s or less at an upstream portion of the tuyere.

11. The method of operating a blast furnace according to claim 9 or 10, wherein the reducing agent comprises at least one selected from the group consisting of blast furnace gas, coke oven gas, ammonia, carbon monoxide, hydrogen, methane, ethane, ethylene, acetylene, propane, propylene, propyne, butane, butene, butyne, methanol, ethanol, and dimethyl ether.
